Europäisches Patentamt

European Patent Office

Office européen des brevets

(11) Numéro de publication: **0 430 838 A1**

# DEMANDE DE BREVET EUROPEEN

(21) Numéro de dépôt: 90460043.4

(22) Date de dépôt: 14.11.90

(51) Int. Cl.⁵: **B01D 5/00**, B01D 1/16, //C05F3/06

(30) Priorité: 22.11.89 FR 8915591

(43) Date de publication de la demande: 05.06.91 Bulletin 91/23

(84) Etats contractants désignés:
AT BE CH DE DK ES FR GB GR IT LI LU NL SE
Bulletin 1

(71) Demandeur: **Hellary, Dominique**
**Le Clio**
**F-22120 Côtes d'Armor(FR)**

(72) Inventeur: **Hellary, Dominique**
**Le Clio**
**F-22120 Côtes d'Armor(FR)**

(54) **Condenseur poreux, dispositif de distillation et son application au traitement du lisier de porc.**

(57) L'invention concerne un condenseur (1) permettant le traitement d'un mélange gazeux à base d'air, afin de séparer au moins une partie de l'un des composés de l'air auquel il est initialement mélangé sous forme gazeuse et de l'extraire sous forme liquide.

Un conduit poreux (2) comportant une ouverture d'entrée (3) par laquelle le mélange gazeux est introduit et une ouverture de sortie (4) par laquelle le mélange ressort aprés traitement , est placé en partie supérieure d'un volume de sable (5) de faible granulométrie .

Des moyens permettent l'évacuation du composé extraite des sables au voisinage des conduits de maniére à maintenir la tension de vapeur de ce composé dans le sable inférieure à celle régnant à l'interieur du conduit poreux.

L'invention concerne également un dispositif de distillation comportant des condenseurs poreux et son application au traitement du lisier de porcs.

figure 1

EP 0 430 838 A1

## CONDENSEUR POREUX, DISPOSITIF DE DISTILLATION D'UN LIQUIDE, DE CONDENSATION FRACTION-NÉE, DE TRAITEMENT DU LISIER DE PORCS

L'invention concerne un condenseur poreux qui permet la séparation au moins d'une partie d'un composé d'un mélange gazeux à base d'air.

Elle concerne également un dispositif de distillation, et de distilation fractionnée ,incorporant un tel condenseur et l'utilisation de ce dispositif pour le traitement du lisier de porc.

On connait déja des dispositifs permettant de séparer un composé de l'air auquel il est initialement mélangé. Toutefois la mise en oeuvre de ces dispositifs requiert généralement beaucoup d'énergie et leurs applications commerciales sont donc limitées.

Le but de la présente invention est un condenseur poreux qui permet de réaliser simplement et à cout faible la séparation d'un composé de l'air auquel il est initialement mélangé. Ce condenseur est exploitable dans un dispositif de distillation et permet le traitement du lisier de porcs dans des conditions économiques raisonnables.

Pour résoudre ce probléme le condenseur poreux de l'invention permet le traitement d'un mélange gazeux à base d'air afin de séparer au moins une partie de l'un de ses composés de l'air auquel il est initialement mélangé sous forme gazeuse et de l'extraire sous forme liquide.

Il comporte un conduit poreux comportant une ouverture d'entrée par laquelle le mélange gazeux est introduit et une ouverture de sortie par laquelle le mélange gazeux ressort aprés traitement et un volume de sable de faible granulometrie mais trés drainant.

Le conduit est placé dans le volume de sable, dans la partie inferieure de ce volume, il est prévu des moyens permettant l'évacuation du composé extrait du conduit poreux par le sable.

Ces moyens maintiennent, en équilibre dynamique et instable, la tension de vapeur de ce composé dans le sable à un niveau inferieur à celle régnant à l'interieur du conduit poreux.

Un dispositif de distillation d'un liquide fonctionnant dans des conditions économiques particuliérement interessantes comporte :
- une arrivée de liquide avant distillation,
- une enceinte comporenant dans sa partie supérieure des moyens de brumisation du liquide,
- un ou plusieurs conduits poreux tels que définis plus haut ; traversés par l'air prélevé dans l'enceinte et assurant la séparation au moins partielle de l'un des composés du mélange pulvérisé.

Un tel dispositif de distillation peut avantageusement etre mis en oeuvre pour la distillation du lisier de porcs.

L'invention sera décrite en détail en référence aux dessins dans lesquels:

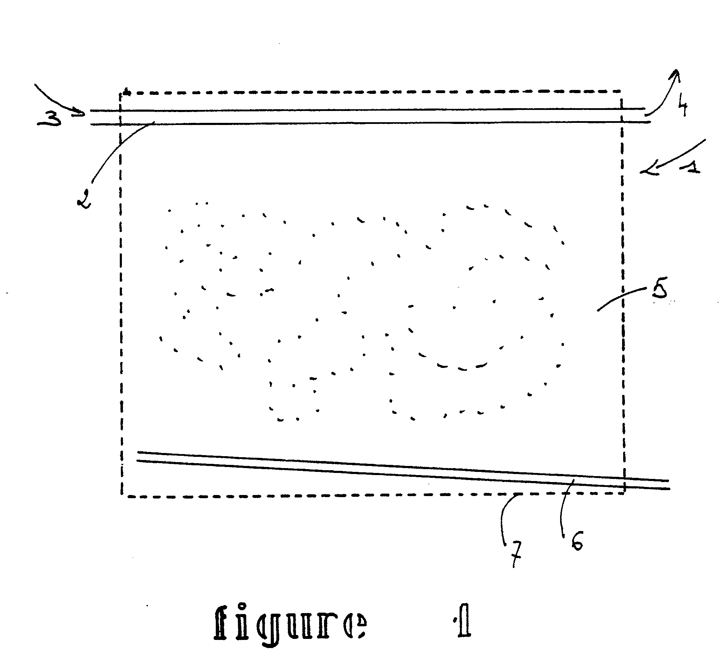

- la figure 1 représente un condenseur poreux dans un mode de réalisation préféré.

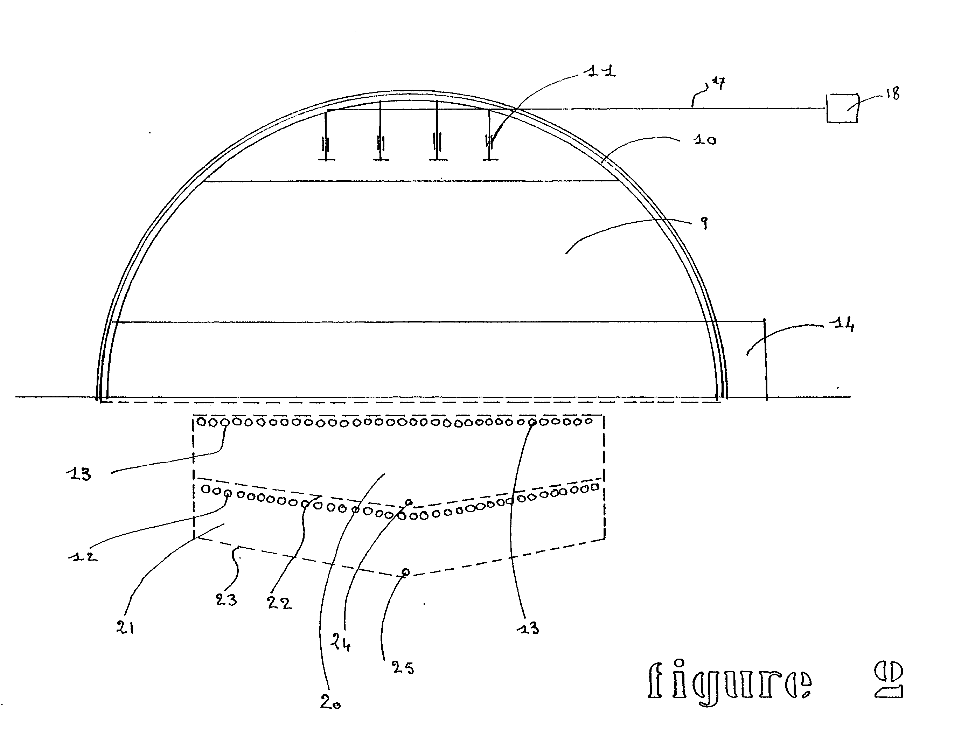

- la figure 2 est une vue de coté en coupe d'un dispositif de distillation selon l'invention

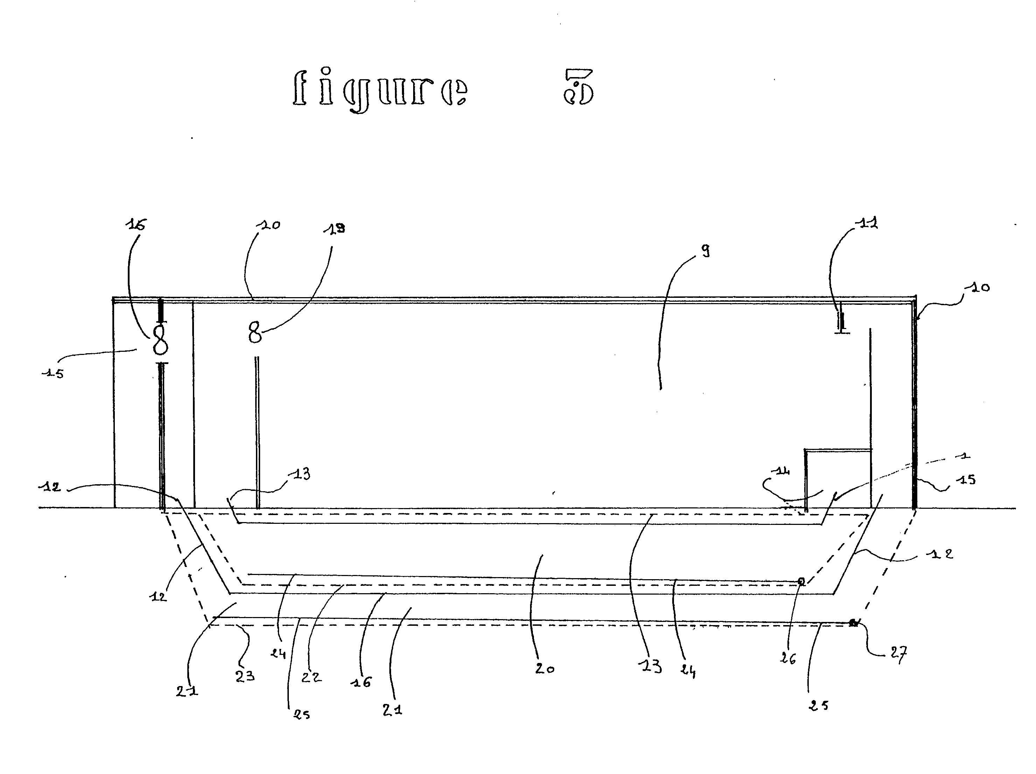

- la figure 3 est une vue de face en coupe d'un dispositif de distillation selon l'invention.

Le condenseur poreux globalement référencé 1 permet le traitement d'un mélange gazeux à base d'air afin de séparer au moins une partie de l'un de ses composés, de l'air auquel il est initialement mélangé sous forme gazeuse.
Ce composé est extrait sous forme liquide.

Il comporte un conduit poreux 2 avec une ouverture d'entrée 3 et une ouverture de sortie 4. Le Conduit poreux 2 est placé dans un volume de sable 5.

De maniére préférée le conduit poreux 2 définit une surface d'échange direct entre l'air et le sable 5. Dans ce cas le conduit 2 forme une voute, il a une section ouverte et assure ainsi la circulation du mélange gazeux et sa mise en contact direct avec le sable. Il est alors possible que la voute elle meme soit étanche, l'ensemble voute-surface de contact avec le sable constitue un condenseur poreux.

Le mélange gazeux à base d'air est introduit dans le conduit poreux 2 par son ouverture d'entrée 3. La vapeur du composé que l'on veut extraire s'y condense par équilibre de tension de vapeur entre le milieu interieur du conduit poreux 2 et le sable 5.

Des moyens 6 sont prévus pour permettre l'évacuation du composé extrait, du sable 5 de maniére à maintenir la tension de vapeur de ce composé dans le sable, inferiieure à celle régnant à l'interieur du conduit poreux.

Ainsi un équilibre dynamique est créé, qui évite toute saturation et assure le fonctionnement continu du condenseur I.

L'effet de la gravité et les phénoménes capillaires assurent à eux seuls le déplacement du liquide extrait à l'intérieur du sable 5. Dans certains cas, une évacuation active du liquide extrait est prévue par exemple par un drain 6, lui meme noyé dans le sable sous le conduit poreux 2.

Selon la nature du composé extrait et le traitement recherché, le liquide extrait peut etre évacué dans le sol ou au contraire collecté pour une utilisation ou un traitement complémentaire. Dans ce cas il possible d'isoler le volume de sable 5 de son environnement par une paroi étanche 7 par exemple constituée d'un film.

L'évacuation du liquide en partie basse du volume de sable est alors réalisée par un drain 6.

Les phénomenes physiques mis en jeu dans les condenseurs poreux sont accompagnés d'une libération d'énergie thermique ce qui constitue bien entendu une propriété importante.

La transmission de vapeur sous pression à travers la parois du conduit poreux se produit jusqu'à équilibre des tensions de vapeur de part et d'autre de la paroi c'est à dire pour des valeurs relatives du composé et non en fonction des valeurs absolues.

Dans le sable ; nous avons un autre équilibre vapeur liquide : une partie qui est sous forme vapeur et une partie sous forme liquide dans une proportion determinée par la nature du sable et par les conditions hygrothermiques.

La partie liquide s'évacue gravitairement , une partie de la vapeur se condense et crée un déséquilibre entre les tensions de vapeur à l'interieur du conduit poreux et dans le sable.

Il est ainsi possible de récupérer de la chaleur enthalpique audela de la température de l'air circulant dans le condenseur.

La granulométrie du sable constituant le volume 5 est choisie de maniére à optimiser les déplacements du liquide à l'interieur de ce volume.

Pour une tension de vapeur donnée , plus un sable est fin , plus il a un indice de vide élevé , plus il peut retenir une quantité importante de composé , plus il est drainant et permet une évacuation gravitaire rapide , meilleur sera son rendement dans un condenseur poreux.

Dans tous les sables essayés les meilleurs resultats ont été obtenus par du maerl , des sables de carriere de granulométrie comprise en 0.8mm et 1mm sans aucune fine.

Nous avons de trés mauvais résultats avec des sables de silice granulométrie 0.3 mm ce sable avait à l'éxtraction 28 % de teneur en eau et dans une éprouvette permettant l'évacuation gravitaire il n'y avait pratiquement pas d'évacuation d'eau.

Par un choix convenable des conditions régnant dans un condenseur , de nombreux composés peuvent etre extraits , toutefois la suite de la description concerne le cas particulier de la condensation de l'eau.

L'air peut contenir plus ou moins d'eau sous forme gazeuse en fonction de sa température et de la pression .

à 1015 mb 1 m3 d'air contient sous forme vapeur un maximum :

4 g d'eau à 0° C.

9 g d'eau à 10° C.

12g d'eau à 14° C.

17g d'eau à 20° C.

24g d'eau à 26° C.

Par le passage dans un condenseur poreux l'air peut perdre une partie de son humidité par échange sous tension de vapeur jusqu'à un point d'équilibre inferieur à la saturation , l'eau ainsi perdue est condensée et fournit de la chaleur ( 540 calories par gramme d'eau ) . Cet air plus sec et plus chaud peut alors transiter dans une enceinte où par brumisation il se charge à nouveau d'eau et ainsi se refroidit.

Le procédé peut etre mis à profit pour distiller un liquide aqueux ; dans ce cas une enceinte 9 est délimitée par une paroi 10.

Des injecteurs 11 sont placés à la partie supérieure de l'enceinte 9

Sous l'enceinte se trouve un ou plusieurs conduits poreux 12 communicant par leur entrée avec l'enceinte et par leur sortie 14 avec l'exterieur.

L'enceinte 9 comporte une prise d'air exterieur 15 et un ventilateur 16 assurant la circulation de l'air depuis l'extérieur , à travers l'enceinte 9 , à travers le conduit poreux 12 avant rejet à l'exterieur ou recyclage dans l'enceinte 9 .

Les injecteurs 11 pulvérisent le liquide aqueux et favorise sa vaporisation . L'air fortement chargé d'eau traverse les conduits poreux 13 , y perd une partie de son eau et ainsi peut etre soit rejeté soit réutilisé dans l'enceinte 9 .

Lors de la vaporisation les particules solides éventuellement en suspension dans l'eau pulvérisée sont séparées de celle-ci et s'accumulent en partie basse de l'enceinte.

l'énergie libérée par l'eau qui se condense dans les condenseurs poreux 12 et 13 contribue à chauffer l'enceinte placée audessus d'eux et favorise la vaporisation.

Le dispositif peut etre amélioré en plaçant un conduit poreux 12 complémentaire en amont de l'enceinte 9 ; l'air traversé par ce conduit poreux 12 perd une partie de son humidité et est donc susceptible de se charge d'une plus grande quantité de vapeur d'eau l'enceinte 9 .

De préférence ce dispositif comporte une arrivée 17 amenant le liquide aqueux d'un reservoir 18 aux injecteurs 11 . Un premier ventilateur 16 faisant penétrer l'air de l'exterieur dans le condenseur poreux amont et d'un deuxieme ventilateur 19 permettant de prélever l'air de l'enceinte et de la faire circuler dans le deuxieme condenseur.

Les conduits poreux 12 et 13 sont placés dans des volumes de sable respectivement 21 et 20 chacun de ces volumes est isolé de son environnement par des enceintes 22 et 23 constituées par des films étanches.

A l'intérieur des volumes 20 et 21 au dessus du fond des enceintes 22 et 23 se trouvent des drains 24 et 25 qui assurent la collecte et l'extraction de l'eau recueillie par le sable dans les volumes 20 et 21 . Les drains 24 et 25 sont légérement inclinés par rapport à l'horizontale et l'eau qu'ils collectent est recueillie en leur point bas respectif 26 et 27 .

Les conduits poreux 12 et 13 constituent de préférence des faisceaux de conduits 28 , 29.

Les volumes de sable sont de préférence de hauteur importante pour privilégier la gravitation sur la capilarité et de largeur indifférente.

L'inertie du systéme est apportée par la masse du sable mais aussi par la masse du sol en place entre les condenseurs poreux.

On controle la migration de la chaleur entre les condenseurs par le coéfficient de conduction de ce sol qui est une fonction de son humidité.

Le dispositif est avantageusement applicable à la mise en oeuvre de tous les procédés dans lesquels une séparation d'un composé d'une solution aqueuse est recherchée . ce composé peut etre sous forme liquide ou solide.

C'est le cas en particulier: .
- du traitement des lisiers de porcs ,
- des eaux saumatres
- des residus superficiels ou des boues de station d'épuration
- des produits qui aprés extraction sont séparés en phase humide et qu'il faut déshydrater : le Kaolin .etc...
- des eaux saumatres
- distilation des fumées : brumisation et condensation fractionnées par niveaux de températures
- sechage des bois
- deshydratation de produits laitiers ...

## Revendications

1 - Condenseur poreux (I) permettant le traitement d'un mélange gazeux à base d'air , afin de séparer au moins une partie de l'un de ses composés , de l'air auquel il est initialement mélangé sous forme gazeuse et de l'extraire sous forme liquide caractérisé en ce qu'il comporte :
- un conduit poreux (2) comportant une ouverture d'entrée (3) par laquelle le mélange gazeux est introduit et une ouverture de sortie (4) par laquelle de mélange gazeux ressort aprés traitement ,
- un volume de sable (5) de faible granulométrie
- le dit conduit étant placé en partie supérieure du volume de sable (5)
- des moyens permettant l'évacuation du composé extrait des sables au voisinage des conduits de maniére à maintenir la tension de vapeur de ce composé dans le sable inferieure à celle régnant à l'interieur du conduit poreux.

2 - Condenseur poreux selon la revendication I caractérisé en ce que le conduit poreux (2) définit une surface de contact direct entre l'air et le sable (5)

3 - Condenseur poreux selon les revendications 1 ou 2 caractérisé en ce que les moyens permettant l'évacuation du composé sont constitués d'un ou plusieurs drains (6) placés en partie inferieure du volume de sable (5) sous le conduit poreux (2)

4 - Condenseur poreux selon l'une des revendications 1 à 3 caractérisé en ce que le volume de sable est isolé de son environnement par une enceinte étanche (7)

5 - Condenseur poreux selon la revendication 4 caractérisé en ce que la enceinte étanche est constituée d'un film (7)

6 - Condenseur poreux selon l'une des revendication I à 5 caractérisé en ce que il comporte un ventilateur assurant la circulation du mélange gazeux dans le condenseur poreux (2)

7 - Dispositif de distillation d'un liquide comportant une arrivée des liquide avant distillation , une enceinte (9) comprenant dans sa partie supérieure des moyens (II) de brumisation du liquide caractérisé en ce qu'il comporte un ou plusieurs conduits (12) poreux dans lesquels circule l'air prélevé dans l'enceinte , et assurant la séparation au moins partielle de l'un des composés du mélange pulvérisé.

8 - Dispositif de distillation selon la revendication 7 caractérisé en ce que le conduit (12) poreux est placé sous l'enceinte (9) et assure au moins partiellement le chauffage de celle-ci.

9 - Dispositif de distillation fractionnée et selective selon la revendication 8 caractérisé en ce qu'il comporte un condenseur poreux amont , traversé par l'air provenant de l'exterieur avant son entrée dans l'enceinte et diminuant la tension de vapeur du composé considéré , un condenseur poreux aval assurant la séparation au moins partielle de l'un des composés du mélange pulvérisé et diminuant la tension de vapeur du composé , le liquide perdant une partie du dit composé dans l'enceinte au contact de l'air , le reste ou condensat se déposant sur le sol de l'enceinte

I0 - Dispositif de distillation selon la revendication 9 caractérisé en ce qu'il comporte un moyen d'amener le liquide jusqu'aux brumisateurs , un premier ventilateur permettant de faire entrer dans l'enceinte de l'air provenant de l'exterieur au travers du premier conduit poreux , et un deuxiéme ventilateur permettant de prélever de l'air de l'enceinte et de le faire circuler dans le deuxiéme conduit poreux.

II - Application du dispositif de l'une quelconque des revendications 7 à I0 au traitement du lisier de porcs.

figure 1

figure 16

# figure 5

EP 0 430 838 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | BE-A-6 736 89  (US ATOMIC ENERGY COMMISSION)<br>* Revendication 1 *<br>— — — | 1 | B 01 D 5/00<br>B 01 D 1/16 //<br>C 05 F 3/06 |
| A | FR-A-2 325 882  (SWISSPOR)<br>* Page 1, ligne 22 - page 2, ligne 24; figures *<br>— — — | 1 | |
| A | DE-A-2 734 583  (S.W. YUAN)<br>* Page 7, ligne 9 - page 9, ligne 2 *<br>— — — | 1 | |
| A | BE-A-3 562 45  (FARBENINDUSTRIE AG)<br>* En entier *<br>— — — | | |
| A | CHEMICAL ABSTRACTS, vol. 100, 1984, page 126, résumé no. 70530e, Columbus, Ohio, US; A.S. CHEKHOL'SKII: "Vapor condensation from a binary mixture in porous pipe", & KHIM. KHIM. TEKHNOL. (MINSK) 1982, 17, 114-16<br>— — — — — | 1 | |

|  | DOMAINES TECHNIQUES RECHERCHES (Int. Cl.5) |
|---|---|
| | B 01 D<br>C 05 F<br>F 28 B<br>F 28 C<br>F 28 D |

**Le présent rapport de recherche a été établi pour toutes les revendications**

| Lieu de la recherche | Date d'achèvement de la recherche | Examinateur |
|---|---|---|
| La Haye | 19 décembre 90 | VAN BELLEGHEM W.R. |